# EUROPÄISCHE PATENTANMELDUNG

(11) **EP 1 703 528 A2**
(43) Veröffentlichungstag der Anmeldung: **20.09.2006**
(21) Anmeldenummer: 06450024.2
(22) Anmeldetag: 23.02.2006
(51) Int. Cl.: H01H 13/06, H01H 13/36

(54) **Baueinheit mit elektrischer Schaltfunktion sowie Verfahren zum Herstellen einer solchen Baueinheit**

(30) Priorität: 18.03.2005 AT 4612005
(71) Anmelder: Pollmann Austria OHG, 3822 Karlstein/Thaya (AT)
(72) Erfinder: Wimmer, Walter, 3823 Weikertschlag/Thaya (AT); Pollmann, Robert, 3822 Karlstein/Thaya (AT)
(74) Vertreter: Sonn & Partner Patentanwälte

(57) **Zusammenfassung**

Baueinheit (1) mit elektrischer Schaltfunktion, mit einer in einem Gehäuse (2) vorgesehenen Schaltereinrichtung (7), die elektrischen Leitern (3, 4; 3, 4a, 4b) zugeordnet ist und einen beweglichen Betätigungsteil (6) aufweist, an dem eine Haube (5) angebracht ist, die mit ihrem Rand an einem die elektrischen Leiter (3, 4; 3, 4a, 4b) fixierenden und teilweise einschließenden Vorumspritzungs-Kunststoffkörper (22) angebracht und daran mittels eines Fertigumspritzungs-Kunststoffkörpers (24), der sowohl den Rand (23) der Haube (5) bedeckt als auch an den Vorumspritzungs-Kunststoffkörper (22) anschließt, dicht angeschlossen ist.

## Beschreibung

Die Erfindung betrifft eine Baueinheit mit elektrischer Schaltfunktion gemäß dem einleitenden Teil von Anspruch 1.

Weiters bezieht sich die Erfindung auf ein Verfahren zum Herstellen einer Baueinheit mit elektrischer Schaltfunktion gemäß dem einleitenden Teil von Anspruch 17.

Es ist bekannt (s. z.B. AT 410 728 B), Schalter-Baueinheiten, bei denen Leiterbahnen oder Leiterbahnenfolien in Kunststoff eingebettet werden, um eine wasserdichte Ausführung zu erzielen, in Verbindung mit Mikroschaltern zu realisieren, wobei die Mikroschalter als solche, d.h. als vorgefertigte Komponenten, montiert und mit den Leiterbahnen verbunden werden. Dabei ist zwecks Erzielung einer wasserdichten Ausführung entweder eine zusätzliche Abdichtung oder aber ein gesondertes Vergießen mit Vergussmasse erforderlich, wobei die Struktur ebenso wie die Herstellung dieser Baueinheiten vergleichsweise aufwändig wird.

Andererseits ist in der DE 36 21 613 A1 eine Bauweise für einen Kontaktschalter beschrieben, wobei vorgefertigte Bauteile ineinander geschoben werden. Am Betätigungsteil des Kontaktschalters ist eine Abdichtung in der Art einer Haube befestigt, wobei diese Abdichtungs-Haube mit einem verdickten Wulst in einer Nut des Schaltergehäuses eingesetzt ist. Diese bekannte Schalter-Bauweise ist aufwändig, wobei nichtsdestoweniger eine sichere Abdichtung nicht gewährleistet ist. Ähnliches gilt auch für den Druckknopfschalter gemäß DE 88 17 202.3 U, bei dem eine innen liegende Dichtungsmembran eingesetzt wird, die eine innere Kammer jenes Gehäuseteils, wo die elektrischen Kontakte herzustellen sind, fluiddicht abschließen soll. Auch hier ist eine komplizierte Montage von Einzelteilen zur Herstellung des Druckknopfschalters erforderlich.

Aufgabe der Erfindung ist es nun, die Nachteile der bekannten Bauweisen zu vermeiden und eine Baueinheit mit elektrischer Schaltfunktion sowie ein Verfahren zur Herstellung einer solchen Baueinheit vorzuschlagen, mit der bzw. mit dem eine einfache und preiswerte Fertigung ermöglicht wird, wobei nichtsdestoweniger auch eine dichte, insbesondere feuchtigkeitsdichte, Ausführung der Baueinheit auf einfache Weise erzielbar sein soll.

Zur Lösung der gestellten Aufgabe sieht die Erfindung eine Baueinheit sowie ein Verfahren wie in den unabhängigen Ansprüchen definiert vor. Vorteilhafte Ausführungsformen und Weiterbildungen sind in den abhängigen Ansprüchen angegeben.

Bei der erfindungsgemäßen Technik sind zwei Umspritzungen vorgesehen, wobei in einer ersten Umspritzung, der Vorumspritzung, die beim Schalten miteinander zu verbindenden oder voneinander zu trennenden Leiter, bevorzugt aus einer metallischen Platte oder Folie, insbesondere aus Kupfer bzw. genauer einer Kupfer-Legierung, wie an sich üblich, ausgestanzte Leiterbahnen, mit einem geeigneten Kunststoff, insbesondere einem thermoplastischen Kunststoff, umspritzt werden. Dabei werden die Leiter in ihrer Position relativ zueinander fixiert, und es wird ein manipulierbarer Körper als Vorprodukt erhalten, an dem die Teile der Schaltereinrichtung und die Haube montiert werden können, bevor abschließend die zweite Umspritzung, die Fertigumspritzung, bevorzugt ebenfalls mit einem thermoplastischen Kunststoff, durchgeführt wird, um die Baueinheit zu komplettieren. Die Schaltereinrichtung weist bevorzugt eine einfache streifen- oder zungenförmige Schaltfeder, beispielsweise aus Bronze oder dgl. Metall, auf, die am Vorumspritzungs-Kunststoffkörper vor dem Fertigumspritzen montiert wird, wobei anschließend an die Montage der Schaltfeder die Haube, an der der insbesondere stößel- oder kolbenförmige Betätigungsteil der Schaltereinrichtung vormontiert wird, am Vorumspritzungs-Kunststoffkörper angeordnet wird.

Selbstverständlich ist es auch denkbar, anstatt gesonderter Leiter bzw. Leiterbahnen eine Leiterplatte oder Leiterbahnfolie, die entsprechende Leiterbahnen aufweist, und die aus einem mit leitendem Material kaschierten Substrat besteht, zu verwenden und vorab im Vorumspritzungs-Schritt in Kunststoff einzubetten, um so einen für die Montage weiterer Komponenten ideal geeigneten Körper zu erhalten. Die Leiterbahnen werden hier vorab in an sich üblicher Weise auf dem Substrat fotoätztechnisch hergestellt ("strukturiert").

Für die Haube kann ein Elastomer oder ein thermoplastisches Elastomer verwendet werden, und dies ist insbesondere dann von besonderem Vorteil, wenn die Haube bei Betätigung der Schaltereinrichtung der Baueinheit verformt wird. Dabei ist es auch zweckmäßig, wenn die Haube eine Öffnung aufweist, durch die der Betätigungsteil unter Abdichtung nach außen ragt. Auf diese Weise wird der Betätigungsteil direkt für eine Betätigung der Schaltereinrichtung zugänglich, wobei die für viele Anwendungen, wie etwa im Bereich von Kraftfahrzeugen, wo die vorliegende Schalt-Baueinheit mit besonderem Vorteil eingesetzt werden kann, vorteilhafte direkte mechanische Betätigung bzw. Krafteinwirkung auf den Betätigungsteil, ohne Zwischenlage der Haube, möglich ist. Dadurch wird eine frühzeitige Abnützung der Haube durch einen den Betätigungsteil antreibenden, somit die Schaltfunktion auslösenden mechanischen Bauteil verhindert. Um dabei eine entsprechende Dichtheit zu gewährleisten, wird mit Vorteil weiter vorgesehen, dass der kolben- oder stößelartige Betätigungsteil eine sich um seinen Umfang herum erstreckende Nut aufweist, in die die Haube mit dem Rand der Öffnung unter dichter Anlage eingreift.

Für eine einfache Struktur und Herstellungsweise ist es auch vorteilhaft, wenn der Vorumspritzungs-Kunststoffkörper eine Führung für den Betätigungsteil bildet. Dabei ist es weiters günstig, wenn der Betätigungsteil einen in Draufsicht unrunden, brückenförmigen Führungsabschnitt aufweist und die Führung in Ausrichtung zum Raum unter der Brücke durchbrochen ist. Auf diese Weise wird einerseits ein exaktes Führen des Betätigungsteiles bei der Schalterbetätigung und andererseits auf einfache Weise ein gutes Zusammenwirken mit einer Schaltfeder der Schaltereinrichtung ermöglicht; in diesem Zusammenhang ist es demgemäß vorteilhaft, wenn der Vorumspritzungs-Kunststoffkörper eine Aufnahme für eine metallische Schaltfeder der Schaltereinrichtung bildet; wobei es weiters von Vorteil ist, wenn sich die Schaltfeder von ihrer Aufnahme durch die Durchbrechung in der Führung frei auskragend erstreckt, wo zumindest einer der Leiter kontaktierbar ist.

Eine einfache Ausbildung wird hier weiters erzielt, wenn die Schaltfeder mit ihrem in der Aufnahme befindlichen Teil mit einem der Leiter elektrisch verbunden ist; hierbei bildet somit der in der Aufnahme enthaltene Teil der Schaltfeder die "Schalterwurzel".

Für eine sichere Betätigung der Schaltereinrichtung über lange Betriebszeiten hinweg ist es ferner günstig, wenn die Schaltfeder mit einem konvexen Abschnitt an der Unterseite des brückenförmigen Führungsabschnitts anliegt.

Zur Erzielung eines guten Kontakts mit dem jeweiligen Leiter ist es auch vorteilhaft, wenn die Schaltfeder am frei auskragenden Ende zumindest eine Krümmung aufweist.

Für ein schlagartiges Schalten oder Umschalten ist es von Vorteil, wenn die Schaltfeder einen gewölbten Abschnitt aufweist, der bei einer Betätigung durch den Betätigungsteil bei Erreichen eines Totpunkts umschnappbar ist. Dabei ist es weiters günstig, wenn der zungenförmige, gewölbte Abschnitt der Schaltfeder mit einem Ende an einem Stützvorsprung abgestützt ist.

Im Hinblick auf eine sichere Kontaktierung ist es auch vorteilhaft, wenn die Schaltfeder am Schalt-Ende eine gesonderte Schaltnoppe aufweist. Weiters ist es günstig, wenn die Schaltfeder eine Beschichtung mit Edelmetall, vorzugsweise Gold, aufweist. Für eine einfache Montage ist es von Vorteil, wenn die Haube und der Betätigungsteil einteilig, vorzugsweise als Zweikomponenten-Spritzgussteil, ausgebildet sind. Weiters ist es für die Rückführung der Schaltereinrichtung in eine vorgegebene Ruhestellung vorteilhaft, wenn dem Betätigungsteil eine Rückstellfeder, vorzugsweise eine ihn umgebende, sich einerseits am Vorumspritzungs-Kunststoffkörper und andererseits am Betätigungsteil oder einen damit fest verbundenen Teil, z.B. der Haube, abstützende Schraubendruckfeder, zugeordnet ist.

Wie bereits erwähnt, wird zweckmäßig beim Vorumspritzungs-Schritt zugleich die Führung für den Schalter-Betätigungsteil und/oder die Aufnahme für die Schaltfeder mitgespritzt. Der Vorumspritzungs-Kunststoffkörper kann im Übrigen im Wesentlichen plattenförmig sein, und er kann mit abstehenden Vorsprüngen hergestellt werden, die beim Fertigumspritzen als Distanzelemente verwendet werden, um den Vorumspritzungs-Kunststoffkörper samt daran montierten Teilen zumindest mit einer Seite in Abstand von der benachbarten Wand des Spritzgusswerkzeuges zu halten. Ähnliche Vorsprünge können auch zur Positionierung der Haube bei der Vor-Montage gespritzt werden.

Beim Fertigumspritzen kann schließlich ein Gehäuse für die Baueinheit mit einem Boden, mit Seitenwänden und mit einer Deckwand hergestellt werden, wobei die Deckwand eine Öffnung aufweist, durch die die Haube samt von ihr gehaltenen Betätigungsteil ragt. Die durch die Schaltereinrichtung miteinander zu verbindenden bzw. voneinander zu trennenden Leiter können an einer beliebigen Stelle, z.B. an einer Seite, aus diesem Gehäuse herausragen. Das Gehäuse kann weiters auch zumindest einen Bereich für die Fixierung der Baueinheit an einer entsprechenden Tragkonstruktion aufweisen.

Die Erfindung wird nachfolgend anhand von in der Zeichnung dargestellten, bevorzugten Ausführungsbeispielen, auf die sie jedoch nicht beschränkt sein soll, noch weiter erläutert. Es zeigen:
Fig. 1 eine schaubildliche Ansicht einer Baueinheit mit elektrischer Schaltfunktion gemäß der Erfindung;
Fig. 2 eine vergleichbare schaubildliche Darstellung dieser Baueinheit, jedoch unter Weglassung einer die eigentliche Schaltereinrichtung abdeckenden Haube, um so die Teile der Schaltereinrichtung ersichtlich zu machen;
Fig. 3 eine schaubildliche, teilweise geschnittene Darstellung einer Baueinheit gemäß Fig. 1 und 2;
die Fig. 4 und 5 jeweils eine Schnittdarstellung durch den Bereich der Baueinheit, wo die Schaltereinrichtung untergebracht ist, und zwar einmal in einem Zustand, in dem der Schalter offen ist (Fig. 4), und einmal im Zustand, in dem der Schalter "geschlossen" ist (Fig. 5), und wobei in Fig. 5 der Einfachheit halber einige Alternativen von baulichen Details gezeigt sind;
Fig. 6 in einer Ansicht ähnlich Fig. 1 ein anderes Ausführungsbeispiel einer Baueinheit gemäß der Erfindung, wobei diese Baueinheit eine Umschaltfunktion aufweist;
die Fig. 7 und 8 in Schnittdarstellungen ähnlich Fig. 4 und 5 die zwei Schaltstellungen der Baueinheit gemäß Fig. 6;
die Fig. 9, 10 und 11 schaubildliche Ansichten ähnlich Fig. 6 von Zwischenstufen im Zuge der Herstellung der Baueinheit gemäß Fig. 6, und zwar nach dem Vorumspritzungs-Schritt (Fig. 9), nach der Montage der Schaltfeder (Fig. 10) und nach der Montage der Haube (Fig. 11), jedoch noch vor der Fertigumspritzung;
Fig. 12 in einer Schnittansicht ähnlich Fig. 7 eine weitere Ausführungsform der erfindungsgemäßen Baueinheit;
Fig. 13 eine schaubildliche, geschnittene Darstellung dieser Baueinheit gemäß Fig. 12 in einer Ansicht von schräg oben, wobei die Haube - ähnlich wie in Fig. 2 - weggelassen wurde; und
Fig. 14 einen Querschnitt durch diese Baueinheit gemäß der Linie XIV-XIV in Fig. 12.

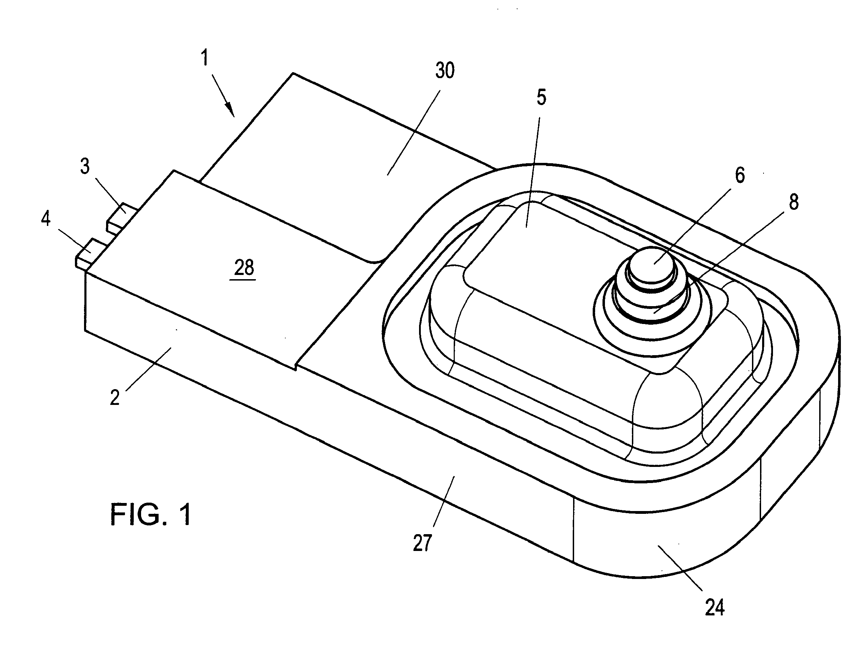

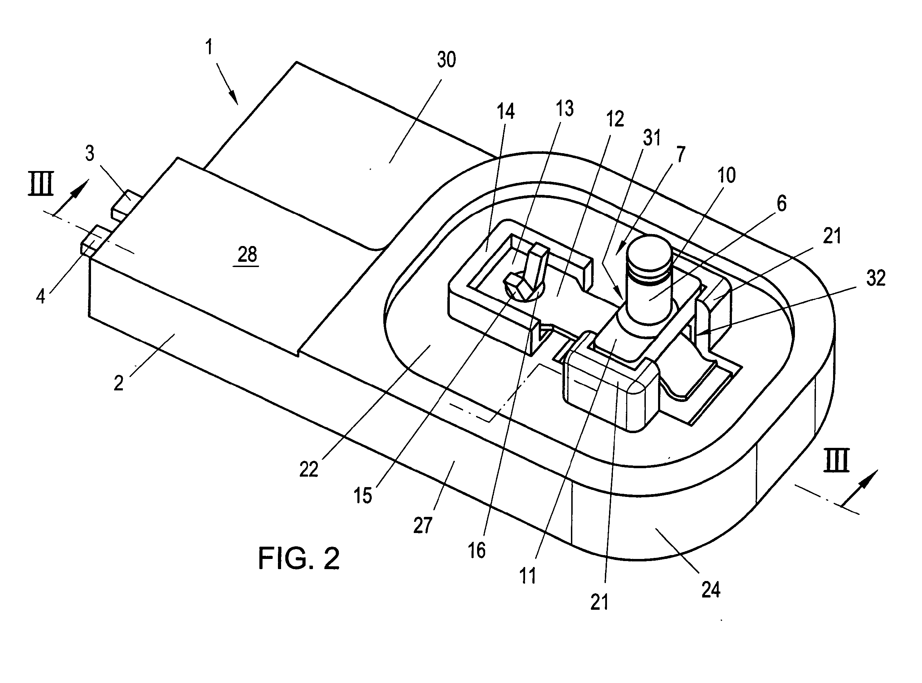

In Fig. 1 ist eine Baueinheit mit elektrischer Schaltfunktion, nachstehend auch Schalter-Baueinheit oder kurz Baueinheit genannt, ganz allgemein mit 1 bezeichnet. Diese Schalter-Baueinheit 1 weist ein Kunststoff-Gehäuse 2 auf, aus dem an einer Seitenwand 2 elektrische Leiter 3, 4 vorstehen. An der Oberseite der Baueinheit 1 ist eine Haube 5 vorgesehen, an der ein kolbenförmiger oder stößelartiger Betätigungsteil 6 der Baueinheit 1, konkret einer unterhalb der Haube 5 in der Baueinheit 1 enthaltenen, in Fig. 2 ersichtlichen eigentlichen elektrischen Schaltereinrichtung 7 gehalten ist.

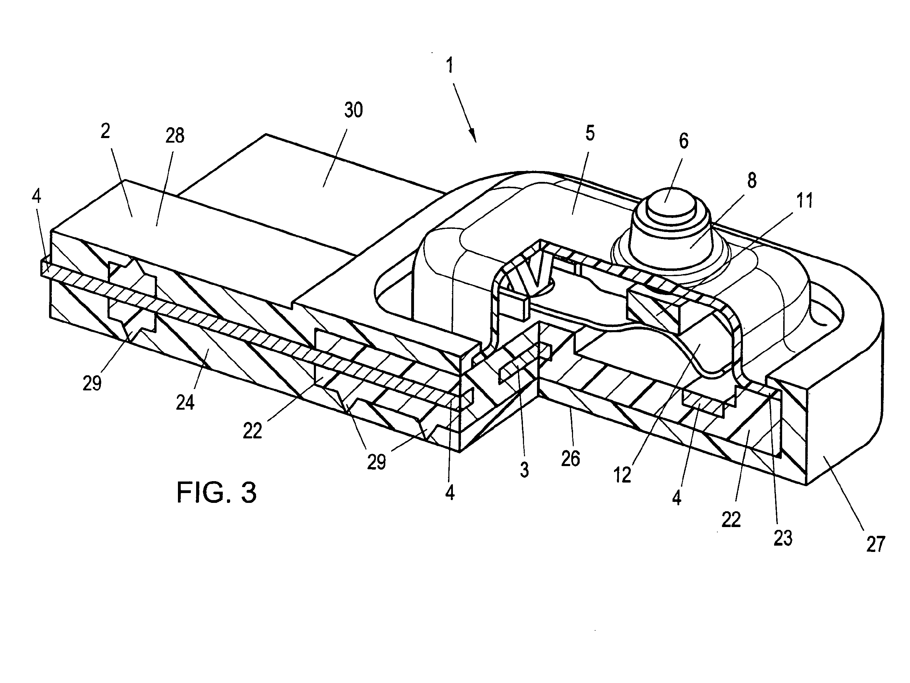

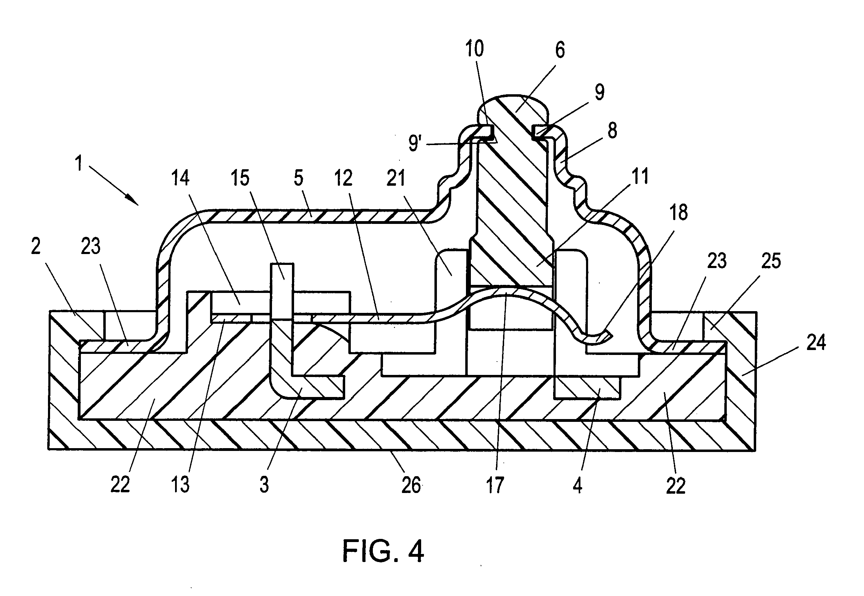

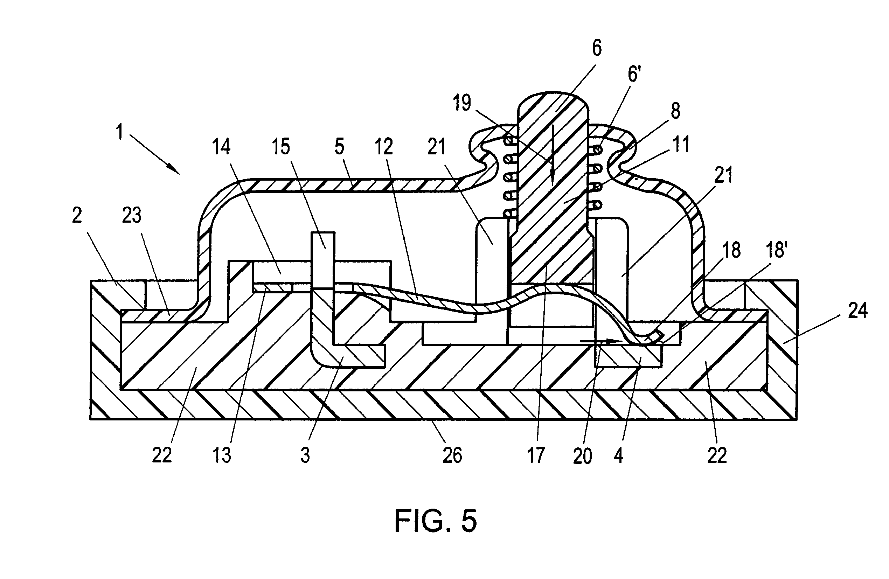

Wie außer aus Fig. 1 und 3 insbesondere auch aus Fig. 4 und 5 zu ersehen ist, weist die Haube 5 einen zylindrischen oder kuppelförmigen Vorsprung 8 mit einer oberen Öffnung 9' auf, deren Rand 9 in eine Nut 10 des Betätigungsteils 6 eingreift und darin unter Druck anliegt. Diese abdichtende Anlage unter Druck wird dadurch erzielt, dass die durch den Rand 9 begrenzte Öffnung 9' kleiner ist als der Querschnitt des Betätigungsteils 6, wie er durch den Boden der Nut 10 im Bereich dieser Öffnung 9' definiert wird.

Der Betätigungsteil 6 hat an seiner unteren Basis einen brückenartigen Führungs- und Druckabschnitt 11, der einerseits zur Führung des Betätigungsteils 6 bei seiner Bewegung zwecks Schalterbetätigung dient und andererseits die eigentliche Schalterbetätigung durch Verbiegen einer Schaltfeder 12 bewerkstelligt; diese Schaltfeder 12 ist streifenförmig aus Metall, insbesondere Bronze, hergestellt, beispielsweise ausgestanzt, und sie hat im Profil einen aus Fig. 4 und 5 ersichtlichen speziellen Verlauf.

Im Einzelnen ist die Schaltfeder 12 mit einem hinteren, breiteren Teil, dem Befestigungsteil 13, in einer Aufnahme 14 gehalten, wobei hiefür zwei divergierende Arme 15 des einen Leiters, z.B. des Leiters 3, herangezogen sind (s. Fig. 2 und 4); diese beiden Arme 15 ragen durch eine Öffnung 16 im Befestigungsteil 13 der Schaltfeder 12 und verlaufen dann divergierend, um so die Schaltfeder 12 formschlüssig mit dem verbreiterten hinteren Befestigungsteil 13 innerhalb der Aufnahme 14 zu halten. Für den Formschluss ist weiters der Befestigungsteil 13 in entsprechender Weise wie die Aufnahme 14 in Draufsicht rechteckig ausgebildet, um so ein Verdrehen der Schaltfeder 12 in ihrer Ebene zu verhindern. Der vom Befestigungsteil 13 frei auskragende Streifenteil oder Zungenteil der Schaltfeder 12 ist nach einem Abschnitt mit geradem Verlauf nach oben gebogen, um einen konvexen Abschnitt 17 in Anlage an der Unterseite des brückenförmigen Führungsabschnitts 11 des Betätigungsteils 6 zu bilden. Im Anschluss daran ist die Schaltfeder 12 zu einer Kontakt-Krümmung 18 am Ende gebogen, vgl. Fig. 4. Diese Kontakt-Krümmung 18 am Ende der Schaltfeder 12 ist im gezeigten Beispiel einfach konkav gebogen, und sie kann bei der Abwärtsbewegung des Betätigungsteils 6, vgl. den Pfeil 19 in Fig. 5, abwärts gedrückt werden, wobei sich die Schaltfeder 12 insbesondere in ihrem Bereich zwischen dem hinteren Befestigungsteil 13 und dem konvexen Eingriffs-Abschnitt 17 verbiegt. Der konkave Endabschnitt mit der Krümmung 18 bewegt sich dabei in Längsrichtung entsprechend dem Pfeil 20 in Fig. 5, wobei er einen Teil eines anderen Leiters, z.B. des Leiters 4, kontaktiert, um so die elektrische Verbindung zwischen den Leitern 3 und 4 über die Kontaktfeder 12 herzustellen. Bei der Abwärtsbewegung des Betätigungsteils 6 wird der kuppelförmige Vorsprung 8 der Haube 5 etwas zusammengedrückt, und zwar zufolge des Eingriffs des Öffnungs-Randes 9 in die Nut 10 des Betätigungsteils 6.

Die Rückstellung des Betätigungsteils 6 aus der Schließstellung gemäß Fig. 5 in die Offenstellung gemäß Fig. 4 wird, abgesehen von der Elastizität der Schaltfeder 12, auch durch die Elastizität der Haube 5 bzw. des Vorsprungs 8 sichergestellt; diese Haube 5 besteht beispielsweise aus einem thermoplastischen Elastomer (TPE; z.B. TPE-E oder TPE-V) oder einem sonstigen Elastomer (z.B. NBR - Acrylnitril-Butadien-Kautschuk; CR - Chlorbutadien-Kautschuk bzw. Polychloropren-Kautschuk; EPDM - Ethylen-Propylen-Dien-Kautschuk; CSM - Chlorsulfoniertes Polyethlyen). Der Kolben 6 kann ebenfalls aus Kunststoff, insbesondere einem thermoplastischen Kunststoff (z.B. PET, PA, POM, ABS, PMMA, usw.) bestehen. Gegebenenfalls könnte selbstverständlich auch zur Rückstellung der Haube 5 bzw. des Vorsprungs 8 und damit des Betätigungsteils 6 zwischen der Oberseite des Vorsprungs 8, benachbart dem Rand 9 der Öffnung 9', und einer den Führungsabschnitt 11 im Inneren der Baueinheit führenden Führung 21 eine Rückstellfeder angeordnet sein; hiebei könnte es sich um eine herkömmliche Schraubendruckfeder aus Metall oder Kunststoff handeln. Eine solche Rückstellfeder 6' in Form einer Schraubendruckfeder ist beispielhaft in Fig. 5 gezeigt, wobei der Einfachheit halber nur in dieser Fig. 5 eine solche Rückstellfeder 6' veranschaulicht ist, auch wenn sie gegebenenfalls in den Fig. 2 und 4 hinzu zu denken wäre, abgesehen davon, dass sie in den nachstehend noch näher erläuterten Ausführungsformen ebenfalls vorgesehen sein kann. Diese Rückstellfeder 6' in Form der Schraubendruckfeder stützt sich einerseits an der Führung 21, die Teil eines Kunststoffkörpers 22 ist (welcher nachfolgend näher erläutert werden wird), und andererseits an einem mit dem Betätigungsteil 6 fest verbundenen Teil, hier an der Haube 5 benachbart deren Anschluss am Betätigungsteil 6, ab; selbstverständlich könnte anstatt dessen der kolbenförmige Betätigungsteil 6 auch unterhalb der Anschlussstelle der Haube 5 einen radialen Vorsprung oder Bund aufweisen, an dem sich die Rückstellfeder 6' abstützt; dies ist jedoch in der Zeichnung nicht näher veranschaulicht.

Eine weitere Alternative in einer baulichen Einzelheit, die in Fig. 5 abweichend von den vorhergehenden Figuren gezeigt ist, besteht darin, dass die Haube 5 mit dem Betätigungsteil 6 einteilig ausgeführt ist, anstatt formschlüssig damit verbunden zu sein; im Einzelnen wird bevorzugt die Haube 5 zusammen mit dem Betätigungsteil 6 in einem Stück gespritzt, insbesondere als Zweikomponenten-Spritzgussteil hergestellt.

Schließlich ist in Fig. 5 noch als weitere Modifikation gezeigt, dass die Schaltfeder 12 zumindest in jenem Bereich, wo der elektrische Kontakt hergestellt werden soll, also im Bereich der Kontakt-Krümmung 18, eine einen besonders guten elektrischen Kontakt bewirkende Beschichtung 18' mit einem elektrisch gut leitenden Edelmetall, bevorzugt Gold, aufweisen kann. Selbstverständlich kann diese Beschichtung 18' nicht nur in einem Teilbereich der Schaltfeder 12 vorhanden sein, sondern es kann die gesamte Schaltfeder 12 eine entsprechende Beschichtung aufweisen.

Die Führung 21 und die Aufnahme 14 sind Teil des vorerwähnten Kunststoffkörpers 22, der durch Vorumspritzung der Leiter 3, 4 mit einem thermoplastischen Kunststoff gebildet wird. Dieser Vorumspritzungs-Kunststoffkörper 22 fixiert die Leiter 3, 4 relativ zueinander und ergibt einen Basiskörper, der sich zur Handhabung für die Montage der Schaltfeder 12 sowie der Haube 5 samt Betätigungsteil 6 der Schaltereinrichtung 7 eignet. Zugleich bildet der Vorumspritzungs-Kunststoffkörper 22 eine plane Auflage für den Rand 23 der Haube 5, wobei dieser Rand 23 flanschartig nach außen vom eigentlichen Haubenkörper wegsteht.

Die Haube 5 wird endgültig mit ihrem Rand 23 dicht am Vorumspritzungs-Kunststoffkörper 22 durch einen das Gehäuse 2 bildenden Fertigumspritzungs-Kunststoffkörper 24 gehalten, welcher beim Spritzvorgang so geformt wird, dass er mit einem Rand 25 über den Rand 23 der Haube 5 und den darunter liegenden Vorumspritzungs-Kunststoffkörper 22 greift, dabei mit diesem Rand 25 jedoch eine Öffnung für die Haube 5 belässt. Im Übrigen bildet aber dieser Fertigumspritzungs-Kunststoffkörper 24 einen Boden 26 sowie Seitenwände 27 und eine Deckwand 28 des Gehäuses. Der Boden 26 hat eine Dicke entsprechend der Höhe von Vorsprüngen 29 des Vorumspritzungs-Kunststoffkörpers 22, die beim Fertigumspritzungs-Schritt als Distanzelemente fungieren, um den Vorumspritzungs-Kunststoffkörper 22 samt Schaltfeder 12, Betätigungsteil 6 und Haube 5 von der benachbarten Wand des Formhohlraums des Spritzgusswerkzeuges im vorgegebenen Abstand zu halten.

Aus der Zeichnung, z.B. Fig. 1, 2 und 3, ist noch ersichtlich, dass das Gehäuse 2 bzw. der Fertigumspritzungs-Kunststoffkörper 24 weiters einen Materialfreistellungsabschnitt 30 aufweist.

Der Vorumspritzungs-Kunststoffkörper und der Fertigumspritzungs-Kunststoffkörper 24 bestehen bevorzugt ebenfalls aus einem thermoplastischen Kunststoff, wie z.B. PE, PA, POM, ABS oder PM-MA.

Die beschriebene Baueinheit 1 besteht somit nur aus sechs Teilen, nämlich aus dem Gehäuse 2, das durch den Fertigumspritzungs-Kunststoffkörper 24 gebildet ist, aus den Leitern 3, 4, die durch den Vorumspritzungs-Kunststoffkörper 22 durch Einbettung darin fixiert und gehalten werden, aus dem Vorumspritzungs-Kunststoffkörper 22 selbst, aus der Schaltfeder 12, aus der Haube 5 und aus dem Betätigungsteil 6.

Die Führung 21 weist, wie insbesondere aus Fig. 2 ersichtlich ist, für die Schaltfeder 12 Durchbrechungen 31, 32 auf, durch die sich die Schaltfeder 12 mit ihrem frei auskragenden Teil hindurch erstreckt.

Die Haube 5 kann gegebenenfalls aus transparentem Kunststoff hergestellt werden, um so die Schaltertätigkeit visuell überprüfen zu können.

Sofern die Leiter 3, 4 auf einer Leiterplatte oder flexiblen Leiterbahnfolie vorliegen, kann letztere selbstverständlich auch mit weiteren Bauelmenten zur Erzielung elektrischer Funktionen bestückt sein, was aber in der Zeichnung nicht näher veranschaulicht ist. Auch kann die Baueinheit 1 selbstverständlich andere Geometrien als in der Zeichnung gezeigt aufweisen, wobei die Geometrie jeweils durch den Einsatzzweck vorgegeben sein wird.

Die beschriebene Baueinheit 1 kann mit besonderem Vorteil als Endschalter oder Mikroschalter in Kraftfahrzeugen, etwa als Schließkontakt bei Türen etc., vorgesehen werden.

Bei der Herstellung wird derart vorgegangen, dass zuerst die Leiter 3, 4, etwa durch Strukturieren eines Leiterplatten- oder Leiterbahnenfolien-Elements oder durch Ausstanzen aus einer Metallfolie, insbesondere Kupferfolie, gebildet werden, wonach diese Leiter 3, 4 in einem Spritzgusswerkzeug fixiert und mit Kunststoff unter Bildung des Kunststoffkörpers 22 vorumspritzt werden. Danach oder währenddessen wird der Betätigungsteil 6 an der Haube 5 vormontiert, und nach Montage der Schaltfeder 12 am Vorumspritzungs-Kunststoffkörper 22 mit Hilfe der Arme 15 des einen Leiters 3 und nach Auflegen der Haube 5 samt vormontiertem Betätigungsteil 6 auf den Vorumspritzungs-Kunststoffkörper 22 wird das so erhaltene Gebilde mit Kunststoff fertig umspritzt, wobei der Rand 23 der Haube 5 umspritzt wird, um so eine Dichtheit der Baueinheit 1 gegenüber Eindringen von Feuchtigkeit bzw. Wasser zu erzielen.

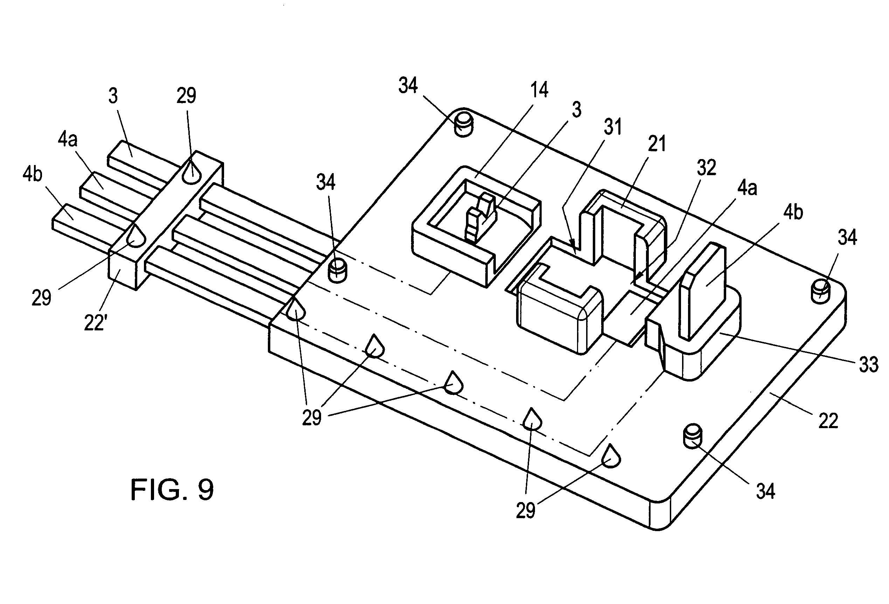

Diese Art der Herstellung wird nachfolgend anhand der Fig. 9, 10 und 11 noch näher bei einem modifizierten Ausführungsbeispiel erläutert werden.

Die vorstehend beschriebene Baueinheit 1 kann auch anstatt mit der beschriebenen Taster- Schaltereinrichung 7 derart ausgeführt werden, dass die Schaltereinrichtung 7 zwei feste Schalt-Zustände "ein" und "aus" aufweist; hiefür ist es beispielsweise denkbar, den Vorsprung 8 der Haube 5 einstülpbar zu gestalten, wobei im eingestülpten Zustand der Schalter "ein" ist. Bei einem weiteren Einwärtsdrücken des Betätigungsteils 6 wird die Schaltfeder 12 dann noch weiter abwärtsgedrückt und stärker vorgespannt, so dass sie nach Freigeben des Betätigungsteils 6 diesen mit einer derart hohen anfänglichen Kraft wieder auswärts drückt, dass die Energie des Betätigungsteils 6 ausreicht, um den einwärts gestülpten Vorsprung 8 der Haube 5 wieder, unter Überwindung eines der Deformation entgegengesetzten Widerstandes, auswärts zu drücken, d.h. wieder auswärts zu stülpen.

Die Schaltfeder 12 kann auch von der Bauart sein, dass sie bei Erreichen einer vorgegebenen Auslenkung umschnappt oder umspringt, um die gewünschte Schaltstellung mit einer festen Anlage an der Leiterbahn zu erreichen. Hierzu kann die Schaltfeder eine Krümmung oder Wölbung aufweisen, wobei in diesem Bereich das Umschnappen erfolgt.

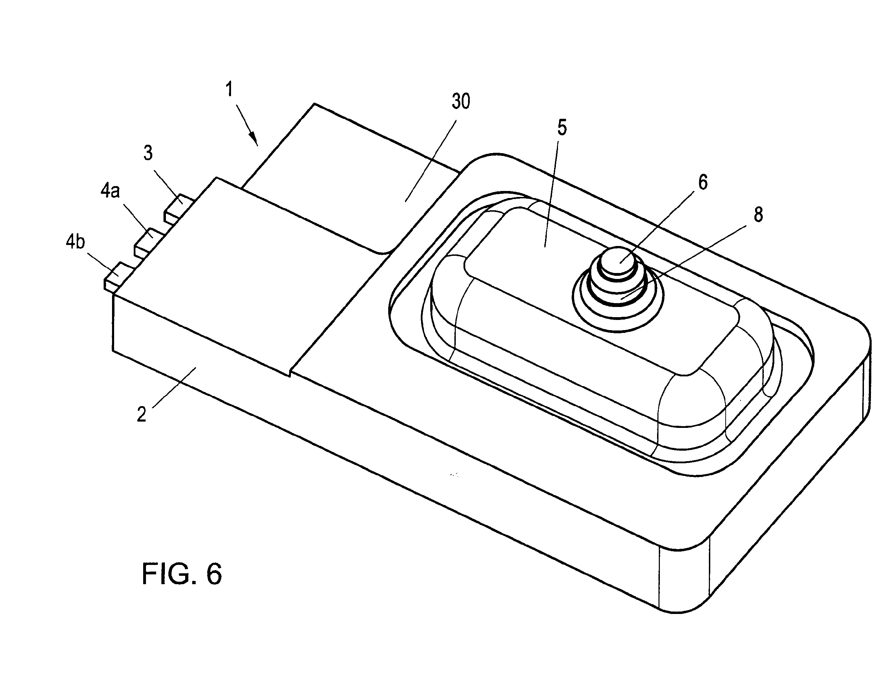

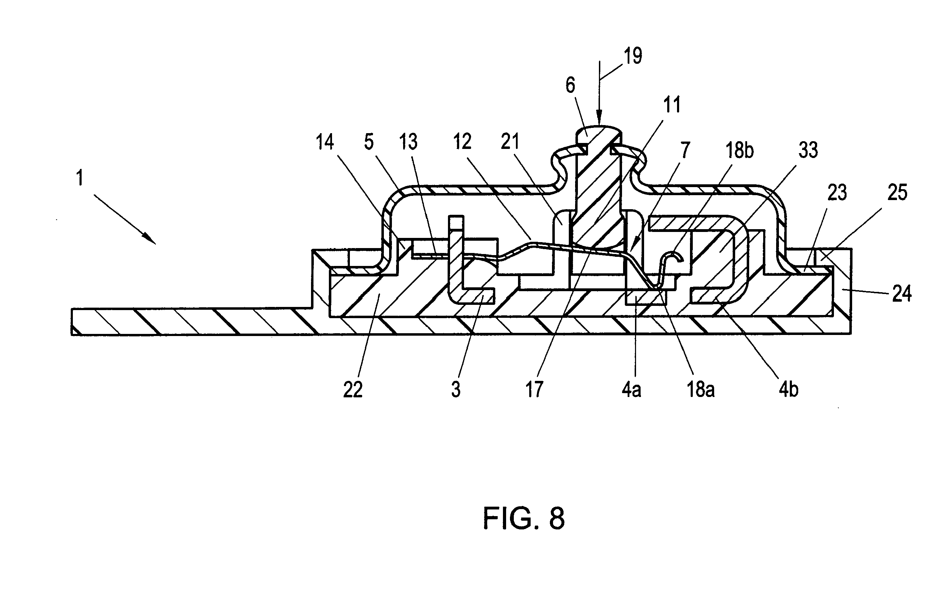

In den Fig. 6 bis 11 ist ein modifiziertes Ausführungsbeispiel der vorliegenden Schalter-Baueinheit 1 gezeigt, wobei diese Baueinheit 1 nunmehr eine Umschaltfunktion - durch Einwärtsdrücken des Betätigungsteils 6, s. Pfeil 19 in Fig. 8, zwecks Herstellung einer elektrischen Verbindung entweder zu einem Leiter 4a oder zu einem Leiter 4b, aufweist. Soweit das Ausführungsbeispiel gemäß Fig. 6 bis 11 dem vorstehend anhand der Fig. 1 bis 5 beschriebenen Ausführungsbeispiel entspricht, sind für entsprechende Komponenten dieselben Bezugszeichen verwendet worden, und es kann sich, soweit eine gleiche Ausführung vorliegt, auch eine neuerliche Beschreibung erübrigen.

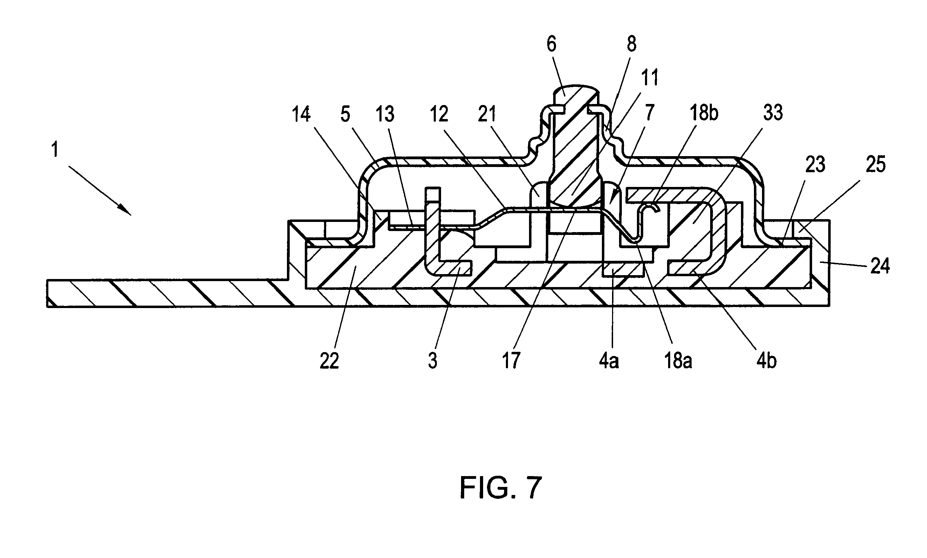

Wie erwähnt wird bei der Baueinheit 1 gemäß Fig. 6 bis 11 eine elektrische Verbindung entweder zu einem Leiter 4a oder zu einem Leiter 4b hergestellt, vgl. die Schaltzustände gemäß den Fig. 8 und 7, und demgemäß sind nunmehr anstatt der zwei Leiter 3, 4 gemäß Fig. 1 bis 5 drei Leiter 3, 4a, 4b im Vorumspritzungs-Kunststoffkörper 22 eingebettet. Dabei entspricht der eine Leiter 4a, zu dem beim Einwärtsdrücken des Betätigungsteils 6 (s. Fig. 8) ein Kontakt mit Hilfe der konkaven Kontakt-Krümmung 18a am Ende der Schaltfeder 12 hergestellt wird, dem Leiter 4 in der Ausführungsform gemäß Fig. 1 bis 5. Zusätzlich ist der Leiter 4b vorgesehen, der mit einem Endabschnitt U-förmig umgebogen ist, s. die Fig. 7 und 8, um so durch eine weitere, endseitige bogenförmige Kontakt-Krümmung 18b der Schaltfeder 12 in der Normalstellung oder Ruhestellung gemäß Fig. 7 von unten her kontaktiert zu werden. Auch dieser Leiter 4b ist im Vorumspritzungs-Kunststoffkörper 22 eingebettet, wobei zur Abstützung des umgebogenen oberen Endes des Leiters 4b, das an der Unterseite kontaktiert wird, ein Stütz-Sockel 33 am Vorumspritzungs-Kunststoffkörper geformt ist.

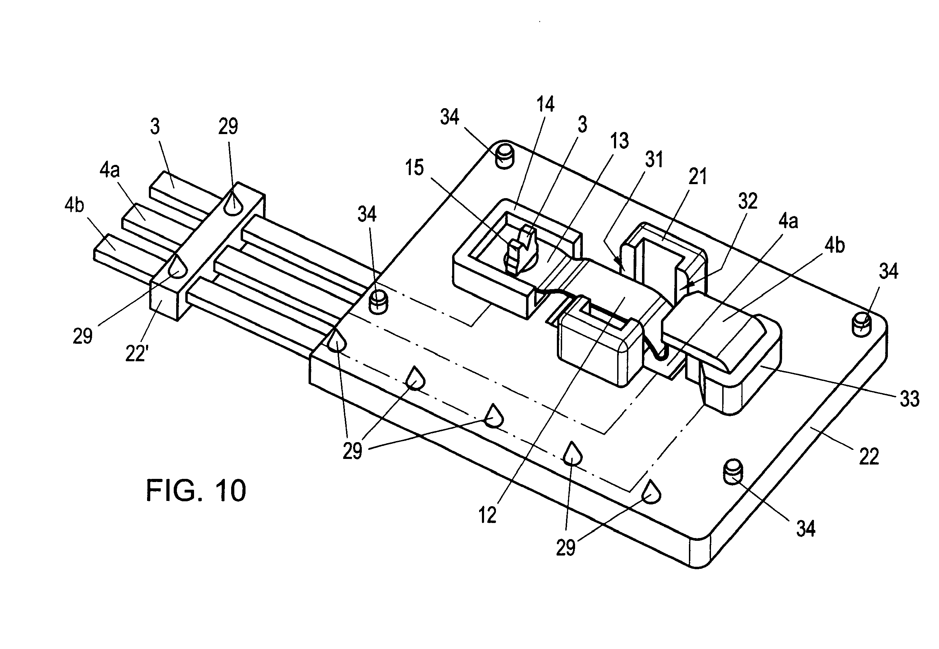

Im Übrigen sind ähnlich wie bei der Ausführungsform gemäß Fig. 1 bis 5 eine Aufnahme 14 für den Befestigungsteil 13 der Schaltfeder 12 sowie eine Führung 21 für den Führungs- und Druckabschnitt 11 des Betätigungsteils 6 am Kunststoffkörper 22 geformt. Der Betätigungsteil 6 ist wiederum auf die vorstehend anhand von Fig. 4 erläuterte Weise im verformbaren Vorsprung 8 der Haube 5 durch formschlüssigen Eingriff eines Öffnungsrandes 9 in eine Nut 10 des Betätigungsteils 6 montiert. Der untere brückenartige Führungsabschnitt 11 drückt bei seiner Betätigung wiederum auf einen konvexen Abschnitt 17 der Schaltfeder 12 nach unten (s. Fig. 8). Weiters ist die Führung 21 wiederum mit Durchbrechungen 31, 32 ausgebildet, vgl. Fig. 9 und 10, durch die sich die Schaltfeder 12 frei auskragend zu den Kontaktbereichen der Leiter 4a, 4b hindurch erstrecken kann, s. insbesondere Fig. 10.

In Fig. 9 ist im Einzelnen der Zustand nach der Vorumspritzung im Zuge der Herstellung der vorliegenden Baueinheit veranschaulicht, wobei ersichtlich ist, dass der Vorumspritzungs-Kunststoffkörper 22 im Wesentlichen plattenförmig ist, an seiner Oberseite jedoch mit der Aufnahme 14, der Führung 21 und dem Sockel 33 geformt ist. Weiters ist auch aus Fig. 9 zu ersehen, dass bei der Vorumspritzung nahe den äußeren Enden der Leiter 3, 4a, 4b ein Teil des Vorumspritzungs-Kunststoffkörpers 22' vorliegt, der dort die streifenförmigen Leiter 3, 4a, 4b relativ zueinander in ihrer Lage fixiert, um so ein Auslenken oder Verbiegen der Leiter 3, 4a, 4b beim Fertigumspritzen zu verhindern.

Im Übrigen ist in Fig. 9 mit strichpunktierten Linien der Verlauf der Abschnitte der Leiter 3, 4a, 4b innerhalb des Vorumspritungs-Kunststoffkörpers 22 angedeutet.

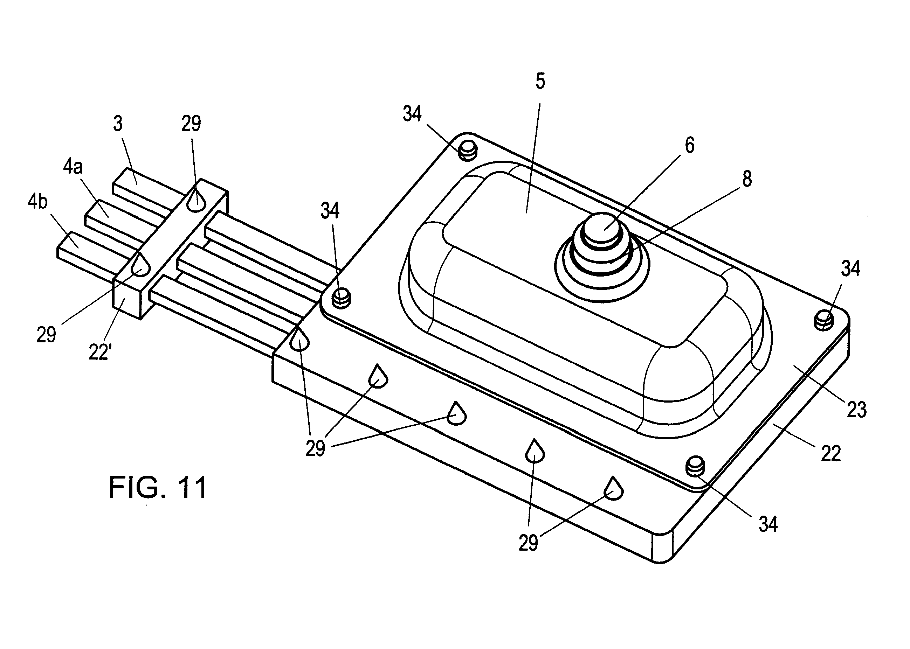

Aus Fig. 9 und 10 sind weiters oberseitige, als Distanzelemente dienende, beispielsweise konische Vorsprünge 29, wie bereits vorstehend in Zusammenhang mit Fig. 1 bis 5 erläutert, sowie auch zapfenförmige Vorsprünge 34 ersichtlich; diese zapfenförmigen Vorsprünge 34 dienen zur Positionierung und Fixierung der Haube 5, die vor der Fertigumspritzung auf den Vorumspritzungs-Kunststoffkörper montiert wird, wie aus Fig. 11 ersichtlich ist.

Bevor jedoch die Haube 5 auf dem Vorumspritzungs-Kunststoffkörper 22 montiert wird, werden die Komponenten der Schaltereinrichtung 7 - hier in Form eines Umschalters - montiert. Wie dabei aus Fig. 10 ersichtlich ist, wird hierzu die Schaltfeder 12 mit einer Öffnung ähnlich wie gemäß Fig. 1 bis 5 über etwas divergierende Arme 15 des einen Leiters 3 aufgeschoben, wobei durch die in Draufsicht unrunde, insbesondere rechteckige Ausbildung des Befestigungsteils 13 sowie der Aufnahme 14 ein horizontales Verschwenken des Befestigungsteils 13 in dessen Ebene verhindert wird; ein Abschieben des Befestigungsteils 13 vom Leiter 3 wird hingegen durch die divergierende Form der Arme 15 verhindert. Nach dieser Anbringung der Schaltfeder 12 wird der ursprünglich noch gerade nach oben abstehende Endteil des Leiters 4b (s. Fig. 9) im rechten Winkel - gemäß der Darstellung in Fig. 9 und 10 nach links - umgebogen, so dass er über dem Ende der Schaltfeder 12 zu liegen kommt, vgl. Fig. 10. Danach wird die Haube 5, an der wie bereits oben erläutert der Betätigungsteil 6 auf die beschriebene Weise vormontiert worden ist, auf dem Vorumspritzungs-Kunststoffkörper 22 angeordnet, wobei sich die Positionier-Vorsprünge 34 durch entsprechende Löcher im Rand 23 der Haube 5 erstrecken; damit ist der Zustand gemäß Fig. 11 erreicht. Im Anschluss daran wird das so erhaltene Gebilde fertigumspritzt, wodurch schließlich die Baueinheit 1 gemäß Fig. 6 bis 8 erhalten wird. Durch die Fertigumspritzung wird eine feuchtigkeitsdichte Anordnung erhalten.

Die Abfolge bei der Herstellung der Baueinheit 1 gemäß Fig. 1 bis 5 ist ganz analog, mit der Ausnahme, dass der Leiter 4b und damit auch der Schritt des Umbiegens von dessen Endteil entfällt, abgesehen davon, dass der Kunststoffkörper 22 auch ohne den Stütz-Sockel 33 geformt werden kann. Eine Wiederholung der Beschreibung für die Herstellung der Baueinheit 1 gemäß Fig. 1 bis 5 kann sich somit erübrigen.

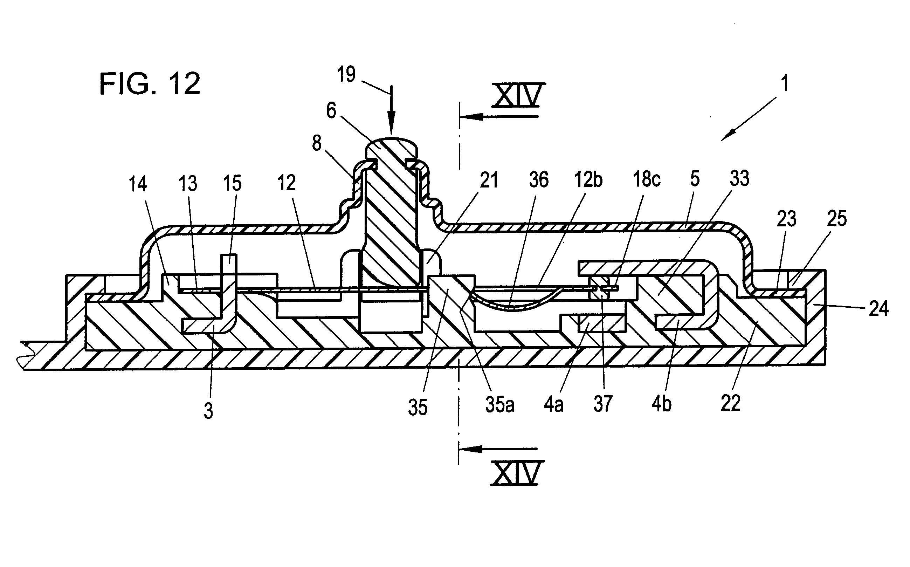

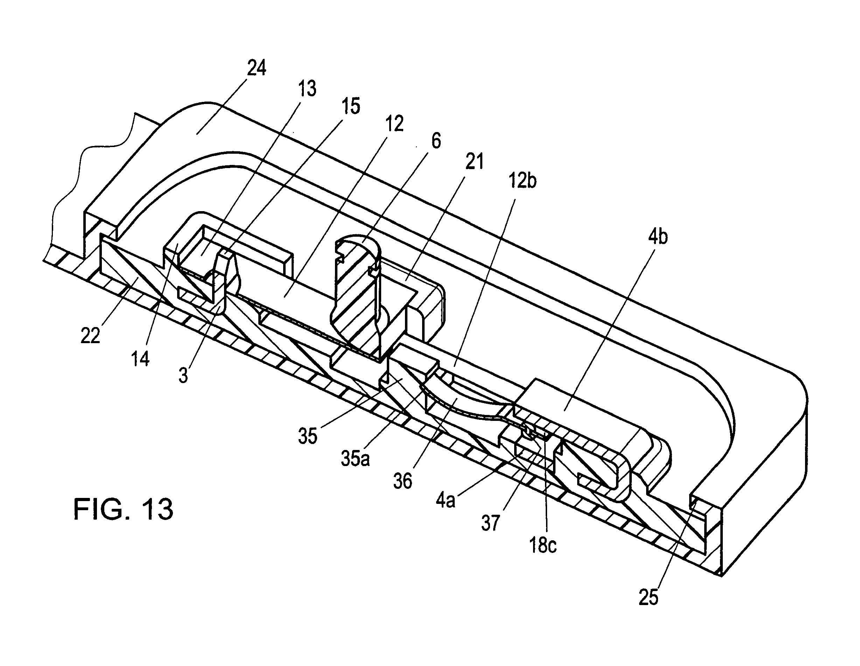

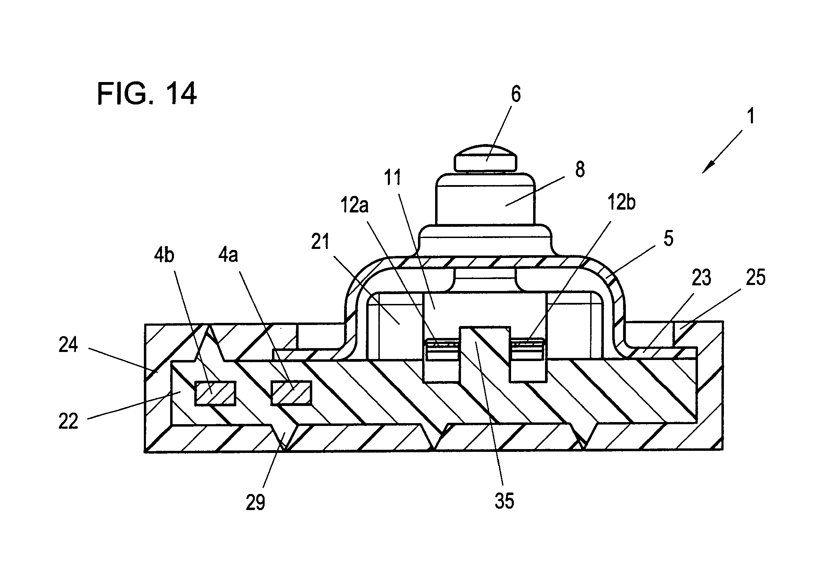

In Fig. 12, 13 und 14 ist in einer Schnittdarstellung ähnlich jener gemäß Fig. 7, in einer aufgeschnittenen Schrägansicht von oben, sowie in einem Querschnitt eine weitere Schalter-Baueinheit 1 gezeigt, die im Wesentlichen jener gemäß den Fig. 6 bis 11 entspricht, so dass sich in einer neuerlichen Beschreibung der entsprechenden Einzelheiten, auch was die Herstellung betrifft, erübrigen kann und nachfolgend nur die Unterschiede der Baueinheit 1 gemäß Fig. 12 und 13 im Vergleich zu jener gemäß Fig. 6 bis 11 erläutert werden sollen.

Die Fig. 12 bis 14 zeigen eine Ausführung der Schaltfeder 12 mit einem Umschnappen zum Umschalten der elektrischen Verbindung zwischen den Leiterbahnen 4a und 4b. Im Einzelnen ist die wiederum mit ihrem hinteren, endseitigen Befestigungsteil 13 in der Aufnahme 14 durch gespreizte Arme 15 der Leiterbahn 3 gehaltene Schaltfeder 12 ungefähr ab der Mitte, nämlich auf der vom Befestigungsteil 13 her gesehen anderen Seite des wiederum in einem elastischen Vorsprung 8 der Haube 5 gehaltenen Kolben-Betätigungsteils 6, durchbrochen bzw. ausgestanzt, wobei zwei sich geradlinig seitlich eines Stützvorsprungs 35 weiter erstreckende seitliche Federarme 12a, 12b gebildet sind; zwischen diesen Federarmen 12a, 12b befindet sich ein freigestellter, zungenförmiger, konkav gewölbter Bügel-Abschnitt 36 der Schaltfeder 12, der am frei auskragenden vorderen Ende 18c der Schaltfeder 12 an die übrige Schaltfeder 12, insbesondere an deren Federarme 12a, 12b, angeschlossen ist. Der Stützvorsprung 35 weist eine Kerbe 35a auf, in der sich der Bügel-Abschnitt 36 mit seinem freien hinteren Ende abstützt. Am vorderen Ende 18c der Schaltfeder 12 ist eine Kontaktnoppe 37 vorgesehen, die z.B. gesondert hergestellt und beispielsweise durch Nieten montiert wird. Bei einer Betätigung der Schalt-Baueinheit 1, d.h. bei einem Abwärtsdrücken des Kolben-Betätigungsteils 6 gemäß Pfeil 19, wird die Schaltfeder 12 nach unten gedrückt, wobei zunächst der bogenförmige Abschnitt 36 der Schaltfeder 12 noch in seiner gezeigten abgestützten, vorgespannten Position verbleibt. Wenn ein durch die Vorspannung bzw. Krümmung des bogenförmigen Abschnitts 36 vorgegebener Totpunkt der Schaltfeder 12 bei der Abwärtsbewegung überwunden wird, dann schnappt der gemäß der Darstellung in Fig. 12 und 13 rechte Teil der Schaltfeder 12 nach unten, so dass die Kontaktnoppe 37 anstatt an der oberen, umgebogenen Leiterbahn 4b nunmehr an der unteren Leiterbahn 4a zur Anlage kommt. Damit wird der gewünschte Umschaltvorgang im Zuge dieses Umschnappens der Schaltfeder 12 realisiert.

Der Stützvorsprung 35 ist, wie aus Fig. 12 ersichtlich ist, bevorzugt ein Teil des Vorumspritzungs-Kunststoffkörpers 22, und an diesem Vorumspritzungs-Kunststoffkörper 22 ist wiederum, wie bereits vorstehend beschrieben, die Haube 5 mit ihrem Rand 23 aufgelegt und beim Fertigumspritzen durch den Rand 25 des Fertigumspritzungs-Kunststoffkörpers 24 fixiert und abgedichtet.

## Patentansprüche

1. Baueinheit (1) mit elektrischer Schaltfunktion, mit einer in einem Gehäuse (2) vorgesehenen Schaltereinrichtung (7), die elektrischen Leitern (3, 4; 3, 4a, 4b) zugeordnet ist und einen beweglichen Betätigungsteil (6) aufweist, und mit einer am Betätigungsteil (6) angebrachten Abdichtungs-Haube (5), **dadurch gekennzeichnet, dass** die Haube (5) mit ihrem Rand an einem die elektrischen Leiter (3, 4; 3, 4a, 4b) fixierenden und teilweise einschließenden Vorumspritzungs-Kunststoffkörper (22) angebracht und daran mittels eines Fertigumspritzungs-Kunststoffkörpers (24), der sowohl den Rand (23) der Haube (5) bedeckt als auch an den Vorumspritzungs-Kunststoffkörper (22) anschließt, dicht angeschlossen ist.

2. Baueinheit nach Anspruch 1, **dadurch gekennzeichnet, dass** die Haube (5) eine Öffnung (9') aufweist, durch die der Betätigungsteil (6) unter Abdichtung nach außen ragt.

3. Baueinheit nach Anspruch 2, **dadurch gekennzeichnet, dass** der stößelartige Betätigungsteil (6) eine sich um seinen Umfang herum erstreckende Nut (10) aufweist, in die die Haube (5) mit dem Rand (9) der Öffnung (9') unter dichter Anlage eingreift.

4. Baueinheit nach einem der Ansprüche 1 bis 3, **dadurch gekennzeichnet, dass** der Vorumspritzungs-Kunststoffkörper (22) eine Führung (21) für den Betätigungsteil (6) bildet.

5. Baueinheit nach Anspruch 4, **dadurch gekennzeichnet, dass** der Betätigungsteil (6) einen in Draufsicht unrunden, brückenförmigen Führungsabschnitt (11) aufweist und die Führung (21) in Ausrichtung zum Raum unter der Brücke durchbrochen ist.

6. Baueinheit nach einem der Ansprüche 1 bis 5, **dadurch gekennzeichnet, dass** der Vorumspritzungs-Kunststoffkörper (22) eine Aufnahme (14) für eine metallische Schaltfeder (12) der Schaltereinrichtung (7) bildet.

7. Baueinheit nach Anspruch 6 und Anspruch 5, **dadurch gekennzeichnet, dass** sich die Schaltfeder (12) von ihrer Aufnahme (14) durch die Durchbrechung (31, 32) in der Führung (21) frei auskragend erstreckt, um zumindest einen der Leiter (4; 4a, 4b) kontaktieren zu können.

8. Baueinheit nach Anspruch 6 oder 7, **dadurch gekennzeichnet, dass** die Schaltfeder (12) mit ihrem in der Aufnahme (14) befindlichen Teil (13) mit einem der Leiter (3) elektrisch verbunden ist.

9. Baueinheit nach einem der Ansprüche 6 bis 8, **dadurch gekennzeichnet, dass** die Schaltfeder (12) mit einem konvexen Abschnitt (17) an der Unterseite des brückenförmigen Führungsabschnitts (11) anliegt.

10. Baueinheit nach einem der Ansprüche 6 bis 9, **dadurch gekennzeichnet, dass** die Schaltfeder (12) am frei auskragenden Ende zumindest eine Krümmung (18; 18a, 18b) aufweist.

11. Baueinheit nach einem der Ansprüche 6 bis 8, **dadurch gekennzeichnet, dass** die Schaltfeder (12) einen gewölbten Abschnitt (36) aufweist, der bei einer Betätigung durch den Betätigungsteil (6) bei Erreichen eines Totpunkts umschnappbar ist.

12. Baueinheit nach Anspruch 11, **dadurch gekennzeichnet, dass** der zungenförmige, gewölbte Abschnitt (36) der Schaltfeder (12) mit einem Ende an einem Stützvorsprung (35) abgestützt ist.

13. Baueinheit nach einem der Ansprüche 6 bis 12, **dadurch gekennzeichnet, dass** die Schaltfeder (12) am Schalt-Ende (18c) eine gesonderte Schaltnoppe (37) aufweist.

14. Baueinheit nach einem der Ansprüche 6 bis 13, **dadurch gekennzeichnet, dass** die Schaltfeder (12) eine Beschichtung (18') mit Edelmetall, vorzugsweise Gold, aufweist.

15. Baueinheit nach einem der Ansprüche 1 bis 14, **dadurch gekennzeichnet, dass** die Haube (5) und der Betätigungsteil (6) einteilig, vorzugsweise als Zweikomponenten-Spritzgussteil, ausgebildet sind.

16. Baueinheit nach einem der Ansprüche 1 bis 15, **dadurch gekennzeichnet, dass** dem Betätigungsteil (6) eine Rückstellfeder (6'), vorzugsweise eine ihn umgebende, sich einerseits am Vorumspritzungs-Kunststoffkörper (22) und andererseits am Betätigungsteil (6) oder einen damit fest verbundenen Teil, z.B. der Haube (5), abstützende Schraubendruckfeder, zugeordnet ist.

17. Verfahren zum Herstellen einer Baueinheit (1) mit elektrischer Schaltfunktion, wobei elektrische Leiter (3, 4; 3, 4a, 4b) in einem Gehäuse (2) angebracht und eine Schaltereinrichtung (7) mit einem beweglichen Betätigungsteil (6) sowie mit einer am Betätigungsteil (6) angebrachten Abdichtungs-Haube (5) montiert wird, **dadurch gekennzeichnet, dass** die Leiter (3, 4; 3, 4a, 4b) mit Kunststoff vorumspritzt werden, um sie in einem Kunststoffkörper zu fixieren, wonach die Schaltereinrichtung (7) sowie die sie umgebende Abdichtungs-Haube (5) auf dem die Leiter fixierenden Vorumspritzungs-Kunststoffkörper (22) angeordnet werden, und dass danach zumindest der Bereich, wo die Haube (5) mit ihrem Rand (23) an den Vorumspritzungs-Kunststoffkörper (22) angrenzt, in einen Fertigumspritzungs-Schritt umspritzt wird.

18. Verfahren nach Anspruch 17, **dadurch gekennzeichnet, dass** beim Vorumspritzungs-Schritt eine Führung (21) für den Betätigungsteil (6) der Schaltereinrichtung (7) mitgespritzt wird.

19. Verfahren nach Anspruch 17 oder 18, **dadurch gekennzeichnet, dass** beim Vorumspritzungs-Schritt eine Aufnahme (14) für eine metallische Schaltfeder (12) der Schaltereinrichtung (7) mitgespritzt wird.

20. Verfahren nach einem der Ansprüche 17 bis 19, **dadurch gekennzeichnet, dass** beim Fertigumspritzungs-Schritt ein Gehäuse (2) mit einem Boden (26), mit Seitenwänden (27) sowie mit einer eine Öffnung, durch die die Haube (5) ragt, aufweisenden Deckwand (28) gespritzt wird.

21. Verfahren nach einem der Ansprüche 17 bis 20, **dadurch gekennzeichnet, dass** der Betätigungsteil (6) der Schaltereinrichtung (7) an der Haube (5) vormontiert wird, wonach die Haube (5) samt dem Betätigungsteil (6) auf dem Vorumspritzungs-Kunststoffkörper (22) angebracht wird.
